# EUROPEAN PATENT SPECIFICATION

(11) **EP 4 610 074 B1**
(45) Date of publication and mention of the grant of the patent: **02.09.2026**
(21) Application number: 25160489.8
(22) Date of filing: 27.02.2025
(51) Int. Cl.: B60H 1/00

(54) **HEAT EXCHANGE SYSTEM FOR COOLING A VEHICLE BATTERY**
WÄRMETAUSCHERSYSTEM ZUR KÜHLUNG EINER FAHRZEUGBATTERIE
SYSTÈME D'ÉCHANGE DE CHALEUR POUR REFROIDIR UNE BATTERIE DE VÉHICULE

(30) Priority: 01.03.2024 IT 202400004570
(43) Date of publication of application: 03.09.2025
(73) Proprietor: FERRARI S.p.A., 41100 Modena (IT)
(72) Inventor: TASSINARI, Matteo, 41100 MODENA (IT); SACERDOTI, Giorgia, 41100 MODENA (IT)
(74) Representative: Studio Torta S.p.A.

(56) References cited:
- CN-A- 117 042 996
- US-A1- 2020 189 357
- US-A1- 2023 104 057

## Description

### Cross reference to related Patent Applications

This Application claims priority from Italian Patent Application no. 102024000004570 filed on March 1st, 2024.

### Technical field

The present invention relates to a heat exchange system for cooling a vehicle battery.

### Background

As known, high-voltage batteries used for electric traction in vehicles must operate within a predefined temperature range, in particular in the 20-40°C range, in order to work optimally. For this purpose, in electrically driven vehicles the battery temperature is adjusted by means of a heat exchange system, which is generally integrated with the cooling system provided for the passenger compartment air conditioning.

The heat exchange liquid flowing in this cooling system is supplied by an electrically driven compressor. Therefore, operating such a system requires a certain amount of electrical energy and contributes to reducing the vehicle range (defined by the total energy stored in the battery).

The temperature reached by the battery cells is one of the most limiting factors when it comes to the performance of an electrically driven vehicle. In fact, the battery temperature naturally tends to increase as the electrical power drawn from the battery itself increases, which in turn goes hand in hand with the provided traction power. Consequently, as the traction power increases, it is necessary, in the known solutions, to supply the compressor of the cooling system adequately, with ever-increasing energy input, in order to limit the battery temperature.

In order to minimise electrical power consumption and the size of the aforementioned compressor, therefore, there is a need to avoid power peaks required to the same compressor when the battery temperature tends to rise due to an increase in the performance required to the vehicle.

The aim of the present invention is thus to provide a heat exchange system for cooling a vehicle battery, which allows to comply with the requirement set forth above in a relatively simple and cost-effective way.

In particular, there is a need to provide a heat exchange system that is relatively versatile in order to cope with different vehicle operating conditions.

US 2020/189357 A1 corresponds to the preamble of claim 1 and discloses a heat transfer fluid circuit having calorie storage means (also called hot storage) and frigorie storage means (also known as cold storage).

### Summary

According to the present invention, a heat exchange system is provided for cooling a vehicle battery, as defined in the appended claims.

### Brief description of the drawings

To better understand the present invention, a preferred embodiment thereof will be now described, for merely exemplary and non-limiting purposes, with reference to the appended drawings, wherein:
- Figure 1 is a diagram of a heat exchange system for cooling a vehicle battery, according to the present invention, combined with a cooling system for a passenger compartment of such a vehicle; and
- Figures 2 to 6 are diagrams similar to the one in Figure 1, and show the flow of a liquid in the heat exchange system of the present invention under different operating conditions.

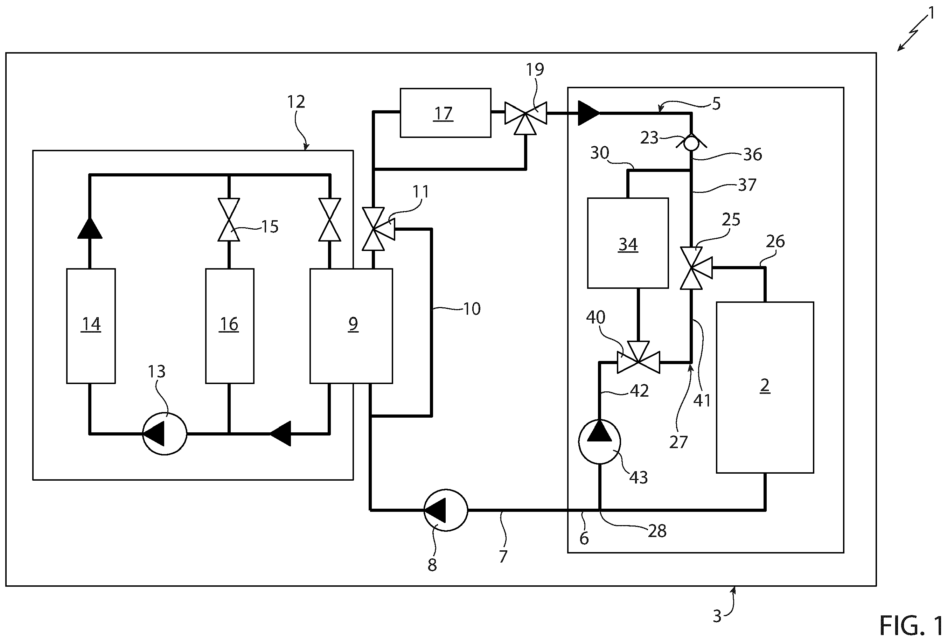

Description of preferred embodiments of the invention In Figure 1, reference number 1 denotes a heat exchange system, schematically shown, to adjust the temperature of a battery 2, defined as a so-called high-voltage battery for the electric traction of a vehicle, which is referred to generically and as a whole by reference number 3 in the same Figure 1.

The heat exchange system 1 comprises an inlet branch 5 and an outlet branch 6, connected to each other via a return branch 7, which comprises a pump 8 driven by an electric motor, not shown, so as to make a heat exchange liquid circulate in the heat exchange system 1 from the inlet branch 5 to the outlet branch 6.

The return branch 7 further comprises a chiller 9 defined by a heat exchanger configured to cool the heat exchange liquid flowing into the return branch 7. Preferably, the chiller 9 is arranged in parallel with a by-pass line 10, in order to divert at least part of the heat exchange liquid, and thus bypass the chiller 9, under the control of a valve 11 arranged at one end of the by-pass line 10.

Preferably, the heat exchanger defining the chiller 9 is arranged along a cooling system 12, schematically shown, in which a coolant circulates for the air conditioning of a passenger compartment of the vehicle 3. The cooling system 12 is of a known type, and typically includes: an electrically driven compressor 13, to convey and compress the coolant; a condenser 14 arranged downstream of the compressor 13, to transfer heat from the coolant to an external environment; at least one thermal expansion valve 15, which further lowers the temperature of the coolant; and a heat exchanger 16 to cool the air entering the passenger compartment.

With reference to the return branch 7, preferably the latter also comprises a heater device 17, arranged for example between the chiller 9 and the inlet branch 5, in order to be able to heat the liquid of the heat exchange system 1 if necessary. More preferably, a by-pass line 18 is arranged in parallel with the heater device 17, to divert the heat exchange liquid and bypass the heater device 17 under the control of a valve 19, arranged at one end of the by-pass line 18.

Regarding the heat exchange system 1, the inlet branch 5 comprises a one-way valve 23, which prevents the heat exchange liquid from flowing backwards, towards the pump 8.

The inlet branch 5 terminates at a diverter valve 25, which consists of three ports or ways and is actuated in a known, non-shown manner (e.g. by an electric actuator) to selectively close one of the three ways and allow the heat exchange liquid to flow between the remaining two ways.

The diverter valve 25 connects the inlet branch 5 to a cooling line 26 and a connecting line 27. These latter are arranged in parallel with each other, and terminate at a T-fitting 28, connected to the cooling line 26, connecting line 27 and outlet branch 6 respectively.

The cooling line 26 extends along the battery 2 and comprises a heat exchanger to cool the battery 2. In particular, this heat exchanger is integrated in the battery 2, according to technical-constructive solutions that are familiar to an ordinary person skilled in the art.

According to the present invention, the heat exchange system 1 further comprises a branch line 30 which extends along a heat accumulator or thermal reservoir 34, containing a material having such characteristics as to store heat, i.e. a material
- having a relatively high thermal capacity (in particular, a thermal capacity greater than or equal to that of distilled water) and/or
- a phase-change material.

The branch line 30 is configured in such a way as to exchange heat between the material contained in the thermal reservoir 34 and the heat exchange liquid flowing into this branch line 30, with no possibility of mixing the two substances. Preferably, the heat exchange liquid flowing in the branch line 30 directly touches the thermal reservoir 34, to exchange heat.

The walls of the thermal reservoir 34 that are not touched by the liquid of the branch line 30 are selected in such a way as to thermally insulate the material therein.

The branch line 30 extends from the inlet branch 5, in particular from an intermediate point between the one-way valve 23 and the diverter valve 25. More specifically, this intermediate point is defined by a T-fitting 35, connected respectively to the branch line 30 and two portions 36 and 37 of the inlet branch 5.

The branch line 30 terminates at an intermediate point of the connecting line 27. More preferably, this intermediate point is defined by a three-way diverter valve 40 and is actuated in a known, non-shown manner (e.g. by an electric actuator) to selectively close one of the three ways and allow the heat exchange liquid to flow between the remaining two ways. The three ways of the diverter valve 40 are connected to the branch line 30 and two portions 41 and 42 of the connecting line 27, respectively. The portion 41 connects the diverter valves 25 and 40 to each other, while the portion 42 connects the diverter valve 40 to the fitting 28.

Preferably, the portion 42 of the connecting line 27 comprises a pump 43, which is actuatable via a motor not shown and is configured so as to convey heat exchange liquid (preferably in the direction from the fitting 28 to the diverter valve 40) when active, and so as to allow heat exchange liquid to flow freely between the fitting 28 and the diverter valve 40 (in both directions) when inactive. For example, the pump 43 is a centrifugal pump.

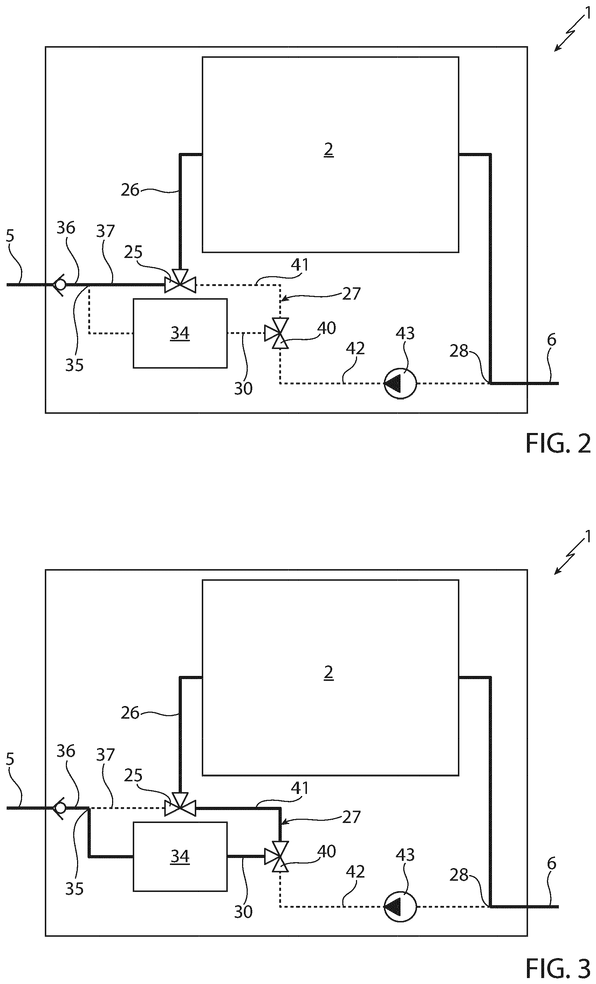

Figures 2 to 6 show different operating conditions of the heat exchange system 1, which are selected by appropriately actuating the diverter valves 25 and 40.

In Figure 2, the diverter valve 25 puts in communication the inlet branch 5 with the cooling line 26 and is closed at the connecting line 27, while the diverter valve 40 is closed at the branch line 30. Therefore, the heat exchange liquid flows from the inlet branch 5 to the battery 2, and then flows out through the fitting 28 and the outlet branch 6. The liquid in the connecting line 27 and in the branch line 30 is stopped. In this way, the battery 2 is cooled (or heated) by setting the temperature of the heat exchange liquid exclusively by the chiller 9 (or heater device 17), i.e. without using the branch line 30. In practice, this operating condition corresponds to the standard configuration also found in known solutions without a thermal reservoir 34, which is excluded from the circulation of the heat exchange liquid.

In Figure 3, however, the thermal reservoir 34 is arranged in series with the battery 2, considering the flow of the heat exchange liquid. In fact, the diverter valve 40 connects the branch line 30 with the portion 41 of the connecting line 27 (and is closed at portion 42), while the diverter valve 25 is closed at the inlet branch 5 and connects the portion 41 of the connecting line 27 with the cooling line 26. Therefore, the heat exchange liquid flows from the portion 36 of the inlet branch 5 into the branch line 30, along the portion 41 of the connecting line 27, and along the cooling line 26, where the battery 2 is cooled, and then flows out through the fitting 28 into the outlet branch 6.

In this case, the chiller 9 and also the thermal reservoir 34 are used to set the temperature of the heat exchange liquid arriving at the battery 2. In other words, the thermal reservoir 34 draws heat from the heat exchange liquid to further lower its temperature, without requiring additional thermal power from the chiller 9.

In particular, the thermal capacity of the material contained in the thermal reservoir 34 is proportional to both its specific heat and its mass: in order not to excessively burden the heat exchange system 1, it is preferable for this material to be defined by a phase-change material, in order to also exploit the concept of latent heat (according to which, during a phase transition, e.g. from liquid to solid and vice versa, the temperature of the material remains constant); by appropriately selecting the material of the thermal reservoir 34 (i.e. the phase-change transition temperature), it is possible to significantly increase the amount of heat exchanged with the liquid flowing in the branch line 30, without excessively increasing the mass of the thermal reservoir 34.

By providing the branch line 30 with the thermal reservoir 34, it is possible to improve the performance of the electric traction of the vehicle 3 in the presence of a peak demand for electric power (e.g. during a track test), with which the temperature of the cells of the battery 2 (and, consequently, that of the heat exchange liquid) would tend to rise rapidly. In fact, the thermal reservoir 34 is able to provide a sort of cooling "boost" that compensates for the tendency of the battery 2 to rise in temperature.

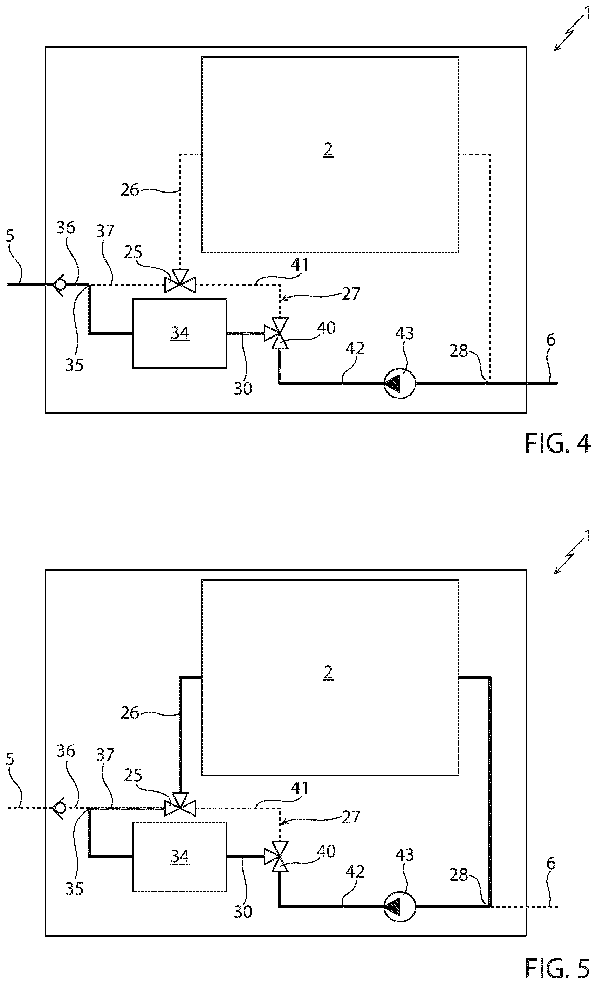

In Figure 4, the diverter valve 25 is closed at the inlet branch 5, as in the previous configuration, but the diverter valve 40 puts the branch line in communication 30 with the portion 42 of the connecting line 27 (and is closed at the portion 41). At the same time, the pump 43 is inactive.

Therefore, the heat exchange liquid flows from the portion 36 of the inlet branch 5 into the branch line 30 and then along the portion 42 of the connecting line 27, and finally flows out through the fitting 28 into the outlet branch 6. In this way, heat can be removed from the thermal reservoir 34 by means of heat exchange liquid previously cooled by the chiller 9, so that a certain amount of "cold" can be stored in the thermal reservoir 34. At the same time, the heat exchange system 1 does not intervene to vary the temperature of the battery 2 (the liquid in the cooling line 26 is stopped); this configuration is used when there is no demand to cool the cells of the battery 2 (e.g. during the first stages of the vehicle 3 running after it has been started).

Therefore, a sort of "cold recharge" is achieved in the thermal reservoir 34, which can be exploited later, either by the configuration of Figure 3, or the configuration of Figure 5.

In this Figure 5, the diverter valve 25 puts the inlet branch 5 in communication with the cooling line 26, while the diverter valve 40 puts the branch line 30 in communication with the portion 42 of the connecting line 27. Both valves 25 and 40 are closed at the portion 41 of the connecting line 28. At the same time, the pump 43 is active and the pump 8 is inactive. In this way, the heat exchange system 1 becomes a loop circuit: the heat exchange liquid, pumped by the pump 43, flows into the branch line 30, along the portion 37 of the inlet branch 5, and along the cooling line 26, where it cools the battery 2, and finally returns to the portion 42 of the connecting line 27 via the fitting 28. In this case, the battery 2 is cooled by setting the temperature of the heat exchange liquid only by the thermal reservoir 34 (i.e. without the chiller 9, e.g. by deactivating the compressor 13).

This configuration is preferably used when the cooling requirements of the battery 2 are not demanding, i.e. when the heat that must be exchanged in the battery 2 (e.g. to achieve and/or maintain a certain threshold temperature) is relatively low.

As an alternative to what is shown for exemplary purposes, the pumping direction of the pump 43 can be opposite.

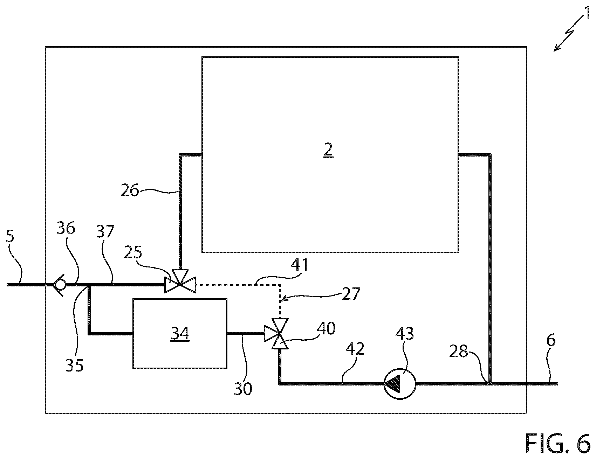

Finally, in Figure 6, the configuration of the diverter valves 25 and 40 is identical to the one in Figure 5, but the pump 43 is inactive, and pump 8 is active.

In this way, the heat exchange liquid, pumped by the pump 8, flows from the inlet branch 5 into both the cooling line 26 and branch line 30, and then rejoins at the fitting 28. In other words, the heat exchange liquid separates into two parts, to cool the battery 2, on the one hand, and to "recharge" an amount of cold in the thermal reservoir 34, on the other hand.

The management of the configurations described above, with the control of the valves 25 and 40 and of the pump 43, is carried out by an electronic control unit, not shown, which operates on the basis of input signals indicative of the temperature of the liquid at various points of the heat exchange system 1 (e.g. downstream and upstream of the battery 2, downstream and upstream of the thermal reservoir 34, downstream and upstream of the chiller 9, etc...) and preferably on the basis of a model of the various components, in order to determine the quantities of thermal energy to be exchanged and thus select the most appropriate configuration, in order to obtain/maintain the desired temperatures in the battery 2 (and possibly maintain a cold storage in the thermal reservoir 34).

The advantages of the proposed solution are evident from the above.

First of all, as explained above, it is possible to use the thermal reservoir 34 to cope with peaks in the cooling demand of the battery 2, without having to oversize the chiller 9 and without absorbing power peaks from the cooling system 12.

Secondly, the material contained in the thermal reservoir 34 for storing cold (defined, for example, by a phase-change material) is distinct from the battery 2, so it is not in contact with electrical or electronic parts.

In addition, the heat exchange system 1 allows an extremely flexible use, as it allows to select the most appropriate configuration by controlling the diverter valves 25 and 40, and pumps 8 and 43, as the amount of heat to be exchanged in the battery 2 varies.

Finally, it is clear that modifications and variations may be made to the heat exchange system 1 described herein with reference to the appended figures, without departing from the protective scope of the present invention as defined in the claims reported below.

## Claims

1. Heat exchange system (1) for cooling a battery (2) of a vehicle (3), the heat exchange system comprising:
- a battery (2),
- an inlet branch (5) for receiving a heat exchange liquid, which, in use, is supplied by a first pump (8) and can be cooled by a chiller (9);
- an outlet branch (6) for circulating said heat exchange liquid towards said chiller (9);
- a cooling line (26), extending from said inlet branch (5) to said outlet branch (6) along said battery (2) and configured so as to cool said battery (2) by said heat exchange liquid;
- a thermal reservoir (34) comprising a material having properties suitable for storing heat/cold;
- a branch line (30), extending along said thermal reservoir (34) and configured to exchange heat between said material and the heat exchange liquid that flows, in use, in the branch line (30);
- at least one valve (25) which is configured and controllable so as to achieve at least the following operating conditions for the heat exchange system (1):
a) a first operating condition, in which the heat exchange liquid flows into the cooling line (26), while the branch line (30) is excluded from this flow;
b) a second operating condition, in which the heat exchange liquid flows from the inlet branch (5) into the branch line (30) and, in series, into the cooling line (26), towards the outlet branch (6);
wherein said valve (25) connects said cooling line (26) to a connecting line (27), which is arranged in parallel with said cooling line (26), between said inlet branch (5) and said outlet branch (6);
**characterized in that** said branch line (30) extends from said inlet branch (5) to an intermediate point of said connecting line (27); and
wherein a further valve (40) is arranged at one end of said branch line (30).

2. The heat exchange system according to claim 1, wherein said branch line (30) extends from the inlet branch (5) starting from a point which is upstream of said valve (25).

3. The heat exchange system according to claim 1 or 2, wherein said valve (25) is a three-way valve, controlled so as to selectively close one of the three ways and to allow the heat exchange liquid to flow between the remaining two ways.

4. The heat exchange system according to anyone of the previous claims, wherein said further valve (40) is a three-way valve, controlled so as to selectively close one of said three ways and let the heat exchange liquid flow between the remaining two ways.

5. The heat exchange system according to anyone of the previous claims, wherein said further valve (40) is arranged at said intermediate point.

6. The heat exchange system according to claim 5, wherein said intermediate point splits said connecting line (27) into a first portion (41), which is connected to said valve (25), and into a second portion (42), which is connected to said outlet branch (6) and to said cooling line (26) by a T-fitting (28).

7. The heat exchange system according to claim 6, wherein the second portion (42) of said connecting line (27) has a second pump (43), which is configured so as to convey heat exchange liquid when active, and to allow heat exchange liquid to flow freely between said T-fitting (28) and said further valve (40) when inactive.

8. The heat exchange system according to any one of the previous claims, wherein said valve (25) and said further valve (40) are configured and controllable so as to achieve:
- a third operating condition, in which the heat exchange liquid flows from the inlet branch (5) into the branch line (30), while the cooling line (26) is excluded from the flow.

9. The heat exchange system according to any one of the previous claims, wherein said valve (25) and said further valve (40) are configured and controllable so as to achieve:
- a fourth operating condition, in which the heat exchange liquid flows from the inlet branch (5) partly into the branch line (30) and partly into the cooling line (26).

10. The heat exchange system according to any one of the previous claims, wherein said valve (25) and said further valve (40) are configured and controllable so as to achieve:
- a fifth operating condition, in which the heat exchange liquid flows in a closed loop in the heat exchange system (1) along said branch line (30) and along said cooling line (26) under the pressure of a second pump (43).

11. The heat exchange system according to any one of the preceding claims, wherein said material is a phase change material.

## Patentansprüche

1. Wärmeaustauschsystem (1) zum Kühlen einer Batterie (2) eines Fahrzeugs (3), wobei das Wärmeaustauschsystem umfasst:
- eine Batterie (2),
einen Zulaufstutzen (5) zur Aufnahme einer Wärmeaustauschflüssigkeit, die im Betrieb von einer ersten Pumpe (8) zugeführt wird und durch einen Kühler (9) gekühlt werden kann;
- einen Auslassstutzen (6) zum Zirkulieren der Wärmeaustauschflüssigkeit zu dem Kühler (9);
- eine Kühlleitung (26), die sich von dem Zulaufstutzen (5) zu dem Auslassstutzen (6) entlang der Batterie (2) erstreckt und so ausgelegt ist, dass sie die Batterie (2) mittels der Wärmeaustauschflüssigkeit kühlt;
- einen Wärmespeicher (34), umfassend ein Material, dessen Eigenschaften für die Speicherung von Wärme bzw. Kälte geeignet sind;
- eine Abzweigleitung (30), die sich entlang des Wärmespeichers (34) erstreckt und so ausgelegt ist, dass sie Wärme zwischen dem Material und der Wärmeaustauschflüssigkeit austauscht, die im Betrieb in der Abzweigleitung (30) fließt;
- mindestens ein Ventil (25), das so ausgelegt und steuerbar ist, dass mindestens die folgenden Betriebszustände für das Wärmeaustauschsystem (1) erreicht werden:
a) ein erster Betriebszustand, in dem die Wärmeaustauschflüssigkeit in die Kühlleitung (26) fließt, während die Abzweigleitung (30) von diesem Durchfluss ausgeschlossen ist;
b) ein zweiter Betriebszustand, in dem die Wärmeaustauschflüssigkeit vom Zulaufstutzen (5) in die Abzweigleitung (30) und von dort in Reihe in die Kühlleitung (26) in Richtung des Auslassstutzens (6) fließt;
wobei das Ventil (25) die Kühlleitung (26) mit einer Verbindungsleitung (27) verbindet, die parallel zur Kühlleitung (26) zwischen dem Zulaufstutzen (5) und dem Auslassstutzen (6) angeordnet ist;
**dadurch gekennzeichnet, dass** sich die Abzweigleitung (30) von dem Zulaufstutzen (5) bis zu einem Zwischenpunkt der Verbindungsleitung (27) erstreckt; und
wobei ein weiteres Ventil (40) an einem Ende der Abzweigleitung (30) angeordnet ist.

2. Wärmeaustauschsystem nach Anspruch 1, wobei sich die Abzweigleitung (30) vom Zulaufstutzen (5) ausgehend von einem Punkt erstreckt, der stromaufwärts des Ventils (25) liegt.

3. Wärmeaustauschsystem nach Anspruch 1 oder 2, wobei das Ventil (25) ein Dreiwegeventil ist, das so gesteuert wird, dass es wahlweise einen der drei Wege verschließt und den Fluss der Wärmeaustauschflüssigkeit zwischen den verbleibenden beiden Wegen ermöglicht.

4. Wärmeaustauschsystem nach einem der vorstehenden Ansprüche, wobei das weitere Ventil (40) ein Dreiwegeventil ist, das so gesteuert wird, dass es wahlweise einen der drei Wege verschließt und die Wärmeaustauschflüssigkeit zwischen den verbleibenden beiden Wegen fließen lässt.

5. Wärmeaustauschsystem nach einem der vorstehenden Ansprüche, wobei das weitere Ventil (40) an dem Zwischenpunkt angeordnet ist.

6. Wärmeaustauschsystem nach Anspruch 5, wobei der Zwischenpunkt die Verbindungsleitung (27) in einen ersten Abschnitt (41), der mit dem Ventil (25) verbunden ist, und in einen zweiten Abschnitt (42), der über ein T-Stück (28) mit dem Auslassstutzen (6) und der Kühlleitung (26) verbunden ist, unterteilt.

7. Wärmeaustauschsystem nach Anspruch 6, wobei der zweite Abschnitt (42) der Verbindungsleitung (27) eine zweite Pumpe (43) aufweist, die so ausgelegt ist, dass sie im aktiven Zustand Wärmeaustauschflüssigkeit fördert und im inaktiven Zustand einen freien Durchfluss der Wärmeaustauschflüssigkeit zwischen dem T-Stück (28) und dem weiteren Ventil (40) ermöglicht.

8. Wärmeaustauschsystem nach einem der vorstehenden Ansprüche, wobei das Ventil (25) und das weitere Ventil (40) so ausgelegt und steuerbar sind, dass Folgendes erreicht wird:
- ein dritter Betriebszustand, bei dem die Wärmeaustauschflüssigkeit vom Zulaufstutzen (5) in die Abzweigleitung (30) fließt, während die Kühlleitung (26) vom Durchfluss ausgeschlossen ist.

9. Wärmeaustauschsystem nach einem der vorstehenden Ansprüche, wobei das Ventil (25) und das weitere Ventil (40) so ausgelegt und steuerbar sind, dass Folgendes erreicht wird:
- ein vierter Betriebszustand, in dem die Wärmeaustauschflüssigkeit aus dem Zulaufstutzen (5) teils in die Abzweigleitung (30) und teils in die Kühlleitung (26) fließt.

10. Wärmeaustauschsystem nach einem der vorstehenden Ansprüche, wobei das Ventil (25) und das weitere Ventil (40) so ausgelegt und steuerbar sind, dass Folgendes erreicht wird:
- ein fünfter Betriebszustand, in dem die Wärmeaustauschflüssigkeit unter dem Druck einer zweiten Pumpe (43) in einem geschlossenen Kreislauf im Wärmeaustauschsystem (1) entlang der Abzweigleitung (30) und entlang der Kühlleitung (26) fließt.

11. Wärmeaustauschsystem nach einem der vorstehenden Ansprüche, wobei das Material ein Phasenwechselmaterial ist.

## Revendications

1. Système d'échange de chaleur (1) pour refroidir une batterie (2) d'un véhicule (3), le système d'échange de chaleur comprenant :
une batterie (2),
une branche d'entrée (5) pour recevoir un liquide d'échange de chaleur qui, en service, est alimenté par une première pompe (8) et peut être refroidi par un refroidisseur (9) ;
- une branche de sortie (6) pour faire circuler ledit liquide d'échange de chaleur vers ledit refroidisseur (9) ;
- une conduite de refroidissement (26), s'étendant de ladite branche d'entrée (5) à ladite branche de sortie (6) le long de ladite batterie (2) et configurée pour refroidir ladite batterie (2) par ledit liquide d'échange de chaleur ;
- un réservoir thermique (34) comprenant un matériau présentant des propriétés adaptées au stockage de la chaleur/du froid ;
- une conduite de ramification (30), s'étendant le long dudit réservoir thermique (34) et configurée pour échanger de la chaleur entre ledit matériau et le liquide d'échange de chaleur qui circule, en service, dans la conduite de ramification (30) ;
- au moins une vanne (25) étant configurée et pouvant être commandée de manière à assurer au moins les états de fonctionnement suivants pour le système d'échange de chaleur (1) :
a) un premier état de fonctionnement, dans lequel le liquide d'échange de chaleur circule dans la conduite de refroidissement (26), tandis que la conduite de ramification (30) est exclue de ce circuit ;
b) un deuxième état de fonctionnement, dans lequel le liquide d'échange de chaleur s'écoule de la branche d'entrée (5) dans la conduite de ramification (30), puis, en série, dans la conduite de refroidissement (26), vers la branche de sortie (6)
ladite vanne (25) reliant ladite conduite de refroidissement (26) à une conduite de raccordement (27), qui est disposée en parallèle avec ladite conduite de refroidissement (26), entre ladite branche d'entrée (5) et ladite branche de sortie (6) ; **caractérisé en ce que** ladite conduite de ramification (30) s'étend de ladite branche d'entrée (5) à un point intermédiaire de ladite conduite de raccordement (27) ; et
une vanne (40) supplémentaire étant disposée à l'une des extrémités de ladite conduite de ramification (30).

2. Système d'échange de chaleur selon la revendication 1, ladite conduite de ramification (30) s'étendant de la branche d'entrée (5) à partir d'un point étant situé en amont de ladite vanne (25).

3. Système d'échange de chaleur selon la revendication 1 ou 2, ladite vanne (25) étant une vanne à trois voies, commandée de manière à fermer sélectivement l'une des trois voies et à permettre au liquide d'échange de chaleur de circuler entre les deux voies restantes.

4. Système d'échange de chaleur selon l'une quelconque des revendications précédentes, ladite vanne (40) supplémentaire étant une vanne à trois voies, commandée de manière à fermer sélectivement l'une desdites trois voies et à permettre au liquide d'échange de chaleur de circuler entre les deux voies restantes.

5. Système d'échange de chaleur selon l'une quelconque des revendications précédentes, ladite vanne (40) supplémentaire étant disposée au niveau dudit point intermédiaire.

6. Système d'échange de chaleur selon la revendication 5, ledit point intermédiaire séparant ladite conduite de raccordement (27) en une première partie (41), qui est raccordée à ladite vanne (25), et en une seconde partie (42), qui est raccordée à ladite branche de sortie (6) et à ladite conduite de refroidissement (26) par un raccord en T (28).

7. Système d'échange de chaleur selon la revendication 6, dans lequel la seconde partie (42) de ladite conduite de raccordement (27) comporte une seconde pompe (43), qui est configurée de manière à acheminer le liquide d'échange de chaleur lorsqu'elle est active, et à permettre au liquide d'échange de chaleur de circuler librement entre ledit raccord en T (28) et ladite vanne (40) supplémentaire lorsqu'elle est inactive.

8. Système d'échange de chaleur selon l'une quelconque des revendications précédentes, ladite vanne (25) et ladite vanne (40) supplémentaire étant configurées et pouvant être commandées de manière à assurer :
- un troisième état de fonctionnement, dans lequel le liquide d'échange de chaleur circule de la branche d'entrée (5) dans la conduite de ramification (30), tandis que la conduite de refroidissement (26) est exclue du circuit.

9. Système d'échange de chaleur selon l'une quelconque des revendications précédentes, ladite vanne (25) et ladite vanne (40) supplémentaire étant configurées et pouvant être commandées de manière à assurer :
- un quatrième état de fonctionnement, dans lequel le liquide d'échange de chaleur circule de la branche d'entrée (5) en partie dans la conduite de ramification (30) et en partie dans la conduite de refroidissement (26).

10. Système d'échange de chaleur selon l'une quelconque des revendications précédentes, ladite vanne (25) et ladite vanne (40) supplémentaire étant configurées et pouvant être commandées de manière à assurer :
- un cinquième état de fonctionnement, dans lequel le liquide d'échange de chaleur circule en boucle fermée dans le système d'échange de chaleur (1) le long de ladite conduite de ramification (30) et le long de ladite conduite de refroidissement (26) sous la pression d'une seconde pompe (43).

11. Système d'échange de chaleur selon l'une quelconque des revendications précédentes, ledit matériau étant un matériau à changement de phase.
